# EUROPÄISCHE PATENTSCHRIFT

(11) **EP 0 615 635 B1**
(45) Veröffentlichungstag und Bekanntmachung des Hinweises auf die Patenterteilung: **03.09.1997**
(21) Anmeldenummer: 92924665.0
(22) Anmeldetag: 04.12.1992
(51) Int. Cl.: G05B 13/02, G06F 7/60

(54) **REGELVERFAHREN UND REGELKREIS**
CONTROL METHOD AND CIRCUIT
PROCEDE ET CIRCUIT DE REGLAGE

(30) Priorität: 04.12.1991 DE 4139945
(43) Veröffentlichungstag der Anmeldung: 21.09.1994
(73) Patentinhaber: DEUTSCHE THOMSON-BRANDT GMBH, 78048 Villingen-Schwenningen (DE)
(72) Erfinder: MAGER, Klaus, D-78073 Bad Dürrheim (DE)
(86) Internationale Anmeldenummer: EP9202806
(87) Internationale Veröffentlichungsnummer: WO9311474

(56) Entgegenhaltungen:
- PATENT ABSTRACTS OF JAPAN vol. 15, no. 141 (C-822)10. April 1991 & JP,A,30 23 813 ( OMROM TATEISI ELECTRON ) 31. Januar 1991 siehe Zusammenfassung
- PT ELECTRONICA-ELEKTROTECHNIEK Bd. 46, Nr. 3, M rz 1991, RIJSWIJK NL Seiten 12 - 15 H. HELLENDOORN 'REDENEREN MET VAGE LOGICA'
- MACHINE DESIGN Bd. 62, Nr. 18, 6. September 1990, CLEVELAND US Seiten 92 - 98 L.A. BERARDINIS 'TOOLING UP FOR THE INFORMATION AGE'

## Beschreibung

Die vorliegende Erfindung betrifft ein Regelverfahren und einen Regelkreis, der nach der unscharfen Logik regelt.

In "der elektroniker", Nr. 3, 1990 ist auf Seite 39 - 43 ein Aufsatz von Günter Trautzl mit dem Titel "Unscharfe Logik: Fuzzy Logic" erschienen.

Für den Begriff "unscharfe Logik" sind neben der Bezeichnung Fuzzy Logic noch die Namen Rule-Base-System, ambivalente Logik und mehrwertige Logik gebräuchlich.

Die unscharfe Logik wurde bereits 1965 entwickelt, um auch nicht genaue und unvollständige Datensätze verarbeiten zu können. Zu diesem Zweck wird mit Hilfe einer Zugehörigkeitsfunktion, die häufig als Membership-Function bezeichnet wird, aus einer Wertetabelle z.B. das Regelsignal für einen Regelkreis gewonnen.

In der genannten Literaturstelle ist dieses Regelverfahren am Beispiel eines Wagens erläutert, auf dem ein Stab mit einer Masse in Bewegungsrichtung des Wagens kippbar befestigt ist. Der Wagen wird vom Regelkreis so in waagerechter Richtung bewegt, daß der Stab mit der Masse nicht umfällt, sondern ausbalanciert wird. Mit anderen Worten ausgedrückt heißt dies, daß der Wagen die Balancierkunst eines Akrobaten nachahmt, der versucht, einen Stab in der hohlen Hand zu balancieren.

Die Lage des Stabes wird durch seine Winkelgeschwindigkeit und den Auslenkwinkel beschrieben, welche die Eingangsvariablen des Reglers darstellen. Die Ausgangsvariable ist die Geschwindigkeit des Wagens.

In der genannten Literaturstelle ist auf Seite 41 dieser Regelkreis mit folgenden Worten beschrieben:

"Der Ansatz mittels Fuzzy Logic ist folgender: Das System hat die zwei Eingangsvariablen Winkel θ und Winkelgeschwindigkeit ω und eine Ausgangsvariable Geschwindigkeit v. Zunächst faßt man alle Eingangs- und Ausgangsvariablen wertemäßig in Gruppen zusammen und gibt auch hierfür die Zugehörigkeitsfunktion an. Zum Beispiel teilt man den Winkel in die Werte groß-positiv, mittel-positiv, klein-positiv, null, klein-negativ, mittel-negativ, groß-negativ. Dabei sollen mit groß alle Winkel von 20 bis 90 Grad (theoretische Grenze) gemeint sein, mit mittel alle Winkel zwischen 5 und 25 Grad, mit klein alle Winkel zwischen 0 und 10 Grad, als null lasse man alle Werte zwischen -0,5 Grad und +0,5 Grad zu. Die Membership-Funktion für groß liege beispielsweise so, daß alle Werte über 45 Grad den Zugehörigkeitsfaktor 1 haben, die Zugehörigkeit dann aber abfällt, um bei 20 Grad bei 0,005 zu liegen. Auf ähnliche Art wird der Wertebereich von ω und von v definiert. Auf diese Weise erhält man eine Zuordnung der Systemvariablen zur Membership-Funktion.

Der zweite Teil des Lösungsansatzes besteht darin, daß jetzt ein System von Regeln in folgender Form aufgestellt wird:
1. Regel: Wenn θ null ist und ω null ist, dann ist v gleich null.
2. Regel: Wenn θ null ist und ω positiv-klein ist, dann ist v gleich positiv-klein.
3. Regel: Wenn θ positiv-klein ist und ω null ist, dann ist v gleich positiv-klein.
4. Regel: Wenn θ null ist und ω negativ-klein ist, dann ist v gleich negativ-klein
und so weiter. Durch solch ein Feld von groben, ungefähren Regeln (meist Erfahrungswerte) kann das gesamte System beschrieben werden."

Die JP-A-3 023 813 zeigt einen Fuzzy-Regler, an den eine - einzige Regelstrecke bestehend aus mehreren miteinander wechselwirkenden Gliedern angeschlossen ist. Als nachteilig ist anzusehen, daß nach dem Stand der Technik für unterschiedliche Regelstrecken jeweils ein eigener, an die jeweilige Regelstrecke angepaßter Regler erforderlich ist, was einen relativ großen Aufwand erfordert.

Aufgabe der Erfindung ist es nun, ein Regelverfahren und einen Regelkreis, der nach der unscharfen Logik regelt, so zu gestalten, daß die wichtigsten Forderungen an einen Regelkreis - Genauigkeit, Stabilität und Schnelligkeit - mit möglichst geringem Aufwand erfüllt werden.

Bei einem Verfahren gemäß Oberbegriff des Anspruchs 1 wird diese Aufgabe dadurch gelöst, daß mehrere Regelstrecken unterschiedlicher Art von nur einem einzigen Fuzzy-Regler bedient werden, der im Zeitmultiplexbetrieb an die Regelstrecken geschaltet wird.

Bei einem Regelkreis gemäß Anspruch 2 wird diese Aufgabe ebenfalls dadurch gelöst, daß mehrere Regelstrecken unterschiedlicher Art von nur einem einzigen Fuzzy-Regler bedient werden, der im Zeitmultiplexbetrieb an die Regelstrecken geschaltet wird.

Es zeigen
- Figur 1: ein erstes Ausführungsbeispiel der Erfindung;
- Fiugr 2: ein zweites Ausführungsbeispiel der Erfindung;
- Fiugr 3: ein drittes Ausführungsbeispiel der Erfindung;
- Figur 4: ein viertes Ausführungsbeispiel der Erfindung für einen Spur- und einen Fokusregelkreis.

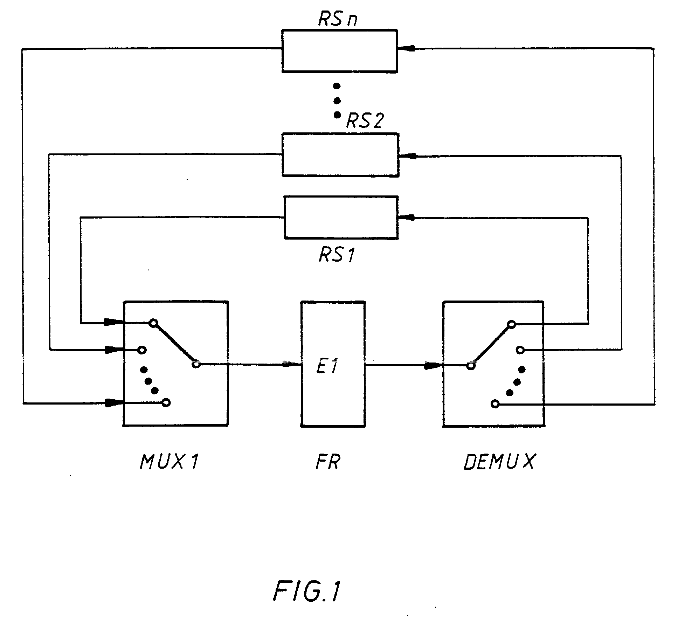

Es wird nun das in Figur 1 abgebildete erste Ausführungsbeispiel der Erfindung zuerst beschrieben und anschließend in seiner Funktion erläutert.

Der Ausgang eines Multiplexers MUX1 ist mit dem Eingang E1 eines Fuzzy-Reglers FR verbunden, dessen Ausgang mit dem Eingang eines Demultiplexers DEMUX verbunden ist. Jeder Ausgang des Demultiplexers DEMUX ist mit dem Eingang je einer Regelstrecke RS1 bis RSn verbunden. Der Ausgang jeder Regelstrecke RS1 bis RSn ist mit je einem Eingang des Multiplexers MUX1 verbunden.

Während des Regelbetriebs werden die Stellsignale für die einzelnen Regelstrecken RS1 bis RSn am Ausgang des Fuzzy-Reglers FR mittels des Demultiplexers DEMUX auf die zugehörigen Regelstrecken verteilt. Mittels des Multiplexers MUX1 wird die Regeldifferenz am Ausgang jeder Regelstrecke RS1 bis RSn an den Eingang E1 des Multiplexers MUX1 weitergeleitet.

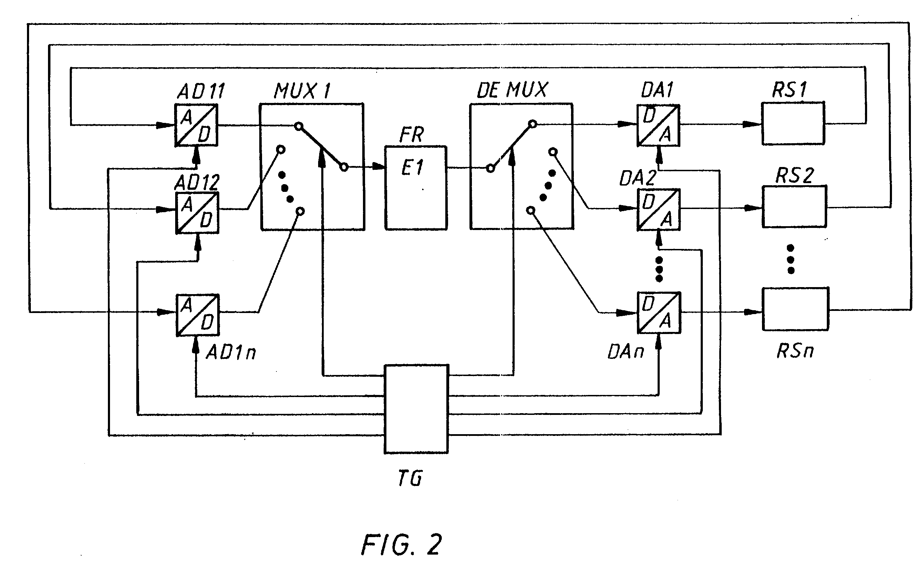

Es wird nun das in Figur 2 abgebildete zweite Ausführungsbeispiel der Erfindung zuerst beschrieben und anschließend in seiner Funktion erläutert.

Der Ausgang eines Multiplexers MUX1 ist mit dem Eingang E1 eines Fuzzy-Reglers FR verbunden, dessen Ausgang mit dem Eingang eines Demultiplexers DEMUX verbunden ist. Jeder Ausgang des Demultiplexers DEMUX ist mit dem Eingang je eines Digital-Analog-Wandlers DA1 bis DAn verbunden. Der Ausgang eines jeden Digital-Analog-Wandlers DA1 bis DAn ist mit dem Eingang je einer Regelstrecke RS1 bis RSn verbunden. Der Ausgang jeder Regelstrecke RS1 bis RSn ist mit dem Eingang je eines Analog-Digital-Wandlers AD11 bis AD1n verbunden. Die Ausgänge der Analog-Digital-Wandler AD11 bis AD1n sind mit den Eingängen des Multiplexers MUX1 verbunden. Die Ausgänge eines Taktgenerators TG sind mit den Takteingängen des Demultiplexers DEMUX, des Multiplexers MUX1, der Digital-Analog-Wandler DA1 bis DA1n und der Analog-Digital-Wandler AD11 bis AD1n verbunden.

Während des Regelbetriebs werden die Analog-Digital-Wandler AD11 bis AD1n, die Digital-Analog-Wandler DA1 bis DAn sowie der Demultiplexer DEMUX und der Multiplexer MUX1 vom Takt des Taktgenerators TG synchronisiert, damit die Stellsignale für die einzelnen Regelstrecken RS1 bis RSn am Ausgang des Fuzzy-Reglers FR an die zugehörige Regelstrecke weitergeleitet werden.

Der wesentliche Vorteil der Erfindung liegt nun darin, daß mehrere Regelkreise von nur einem einzigen Fuzzy-Regler bedient werden, der im Zeitmultiplexbetrieb an die einzelnen Regelstrecken geschaltet wird. Nach der konventionellen Regeltechnik wäre für jeden Regelkreis ein Regler erforderlich, der außerdem in jedem Regelkreis optimiert werden müßte.

Gemäß der Erfindung erhält der Fuzzy-Regler FR im Zeitmultiplexbetrieb von jeder Regelstrecke RS1 bis RSn die Regeldifferenz vom Multiplexer MUX1 geliefert. In Fuzzy-Regler FR wird der zu jeder Regeldifferenz erforderliche digitale Regelwert aus der Wertetabelle gemäß der Zugehörigkeitsfunktion erzeugt und über den Ausgang des Fuzzy-Reglers FR an den Eingang des Demultiplexers DEMUX gegeben, der die digitalen Regelwerte an die einzelnen Digital-Analog-Wandler DA1 bis DAn abgibt. Von den Digital-Analog-Wandlern DA1 bis DAn gelangen nun analoge Stellsignale auf die einzelnen Regelstrecken RS1 bis RSn.

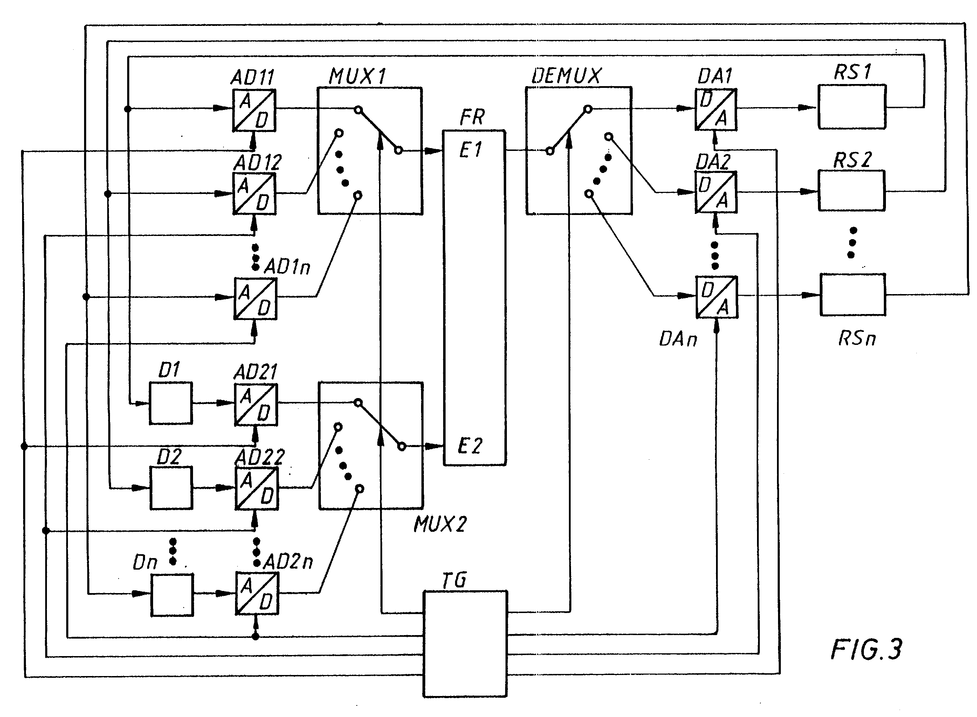

In der Figur 3 ist ein drittes Ausführungsbeispiel gezeigt, das gegenüber dem zweiten Ausführungsbeispiel aus Figur 2 durch einen zweiten Multiplexer MUX2, weitere Analog-Digital-Wandler AD21 bis AD2n und Differenzierglieder D1 bis Dn ergänzt ist.

Der Ausgang jeder Regelstrecke RS1 bis RSn ist mit dem Eingang je eines Differenziergliedes D1 bis Dn verbunden. Der Ausgang jedes Differenziergliedes D1 bis Dn ist mit dem Eingang je eines Analog-Digital-Wandlers AD21 bis AD2n verbunden. Die Ausgänge der Analog-Digital-Wandler AD21 bis AD2n sind mit den Eingängen des Multiplexers MUX2 verbunden, dessen Ausgang mit dem zweiten Eingang E2 des Fuzzy-Reglers FR verbunden ist. Der Taktgenerator TG ist mit den Takteingängen der Analog-Digital-Wandler AD21 bis AD2n verbunden.

Im Fuzzy-Regler FR wird mittels der Zugehörigkeitsfunktion aus der Regeldifferenz, die am Ausgang des Multiplexers MUX1 abnehmbar ist, und der differenzierten Regeldifferenz, die am Ausgang des Multiplexers MUX2 abnehmbar ist, das Stellsignal aus der Wertetabelle ermittelt.

Wenn die einzelnen Regelstrecken RS1 bis RSn nicht zu unterschiedlich sind, können die Digital-Analog-Wandler DA1 bis DAn zwischen den Ausgängen des Demultiplexers DEMUX und den Regelstrecken RS1 bis RSn durch einen Digital-Analog-Wandler zwischen dem Ausgang des Fuzzy-Reglers FR und dem Eingang des Demultiplexers DEMUX ersetzt werden. Ebenso lassen sich die Analog-Digital-Wandler AD11 bis AD1n sowie AD21 bis AD2n durch je einen Analog-Digital-Wandler zwischen dem Ausgang des Multiplexerx MUX1 und dem Fuzzy-Regler FR sowie zwischen dem Multiplexer MUX2 und dem Fuzzy-Regler FR ersetzen.

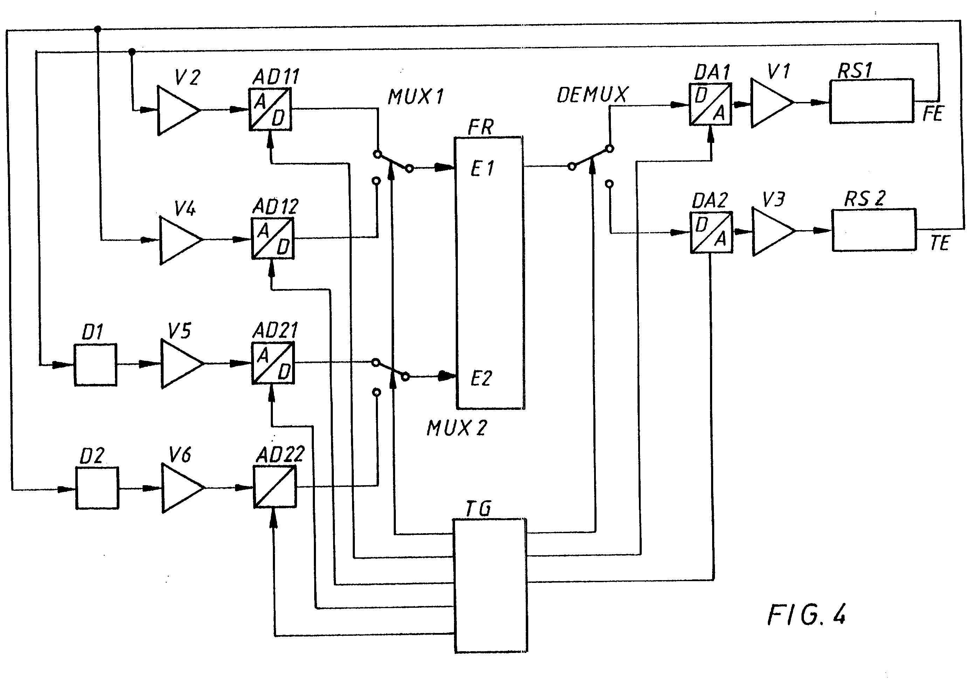

In der Figur 4 ist ein viertes Ausführungsbeispiel dargestellt. Es handelt sich um den Fokus- und den Spurregelkreis eines optischen Wiedergabegerätes oder eines magneto-optischen Aufnahme- und Wiedergabegerätes.

In einem optischen Wiedergabegerät, z.B. in einem CD-Spieler, wird ein Lichtstrahl von einem Fokusregelkreis auf den Aufzeichnungsträger, die sogenannte Kompaktplatte, fokussiert und von einem Spurregelkreis entlang den spiralförmigen Datenspuren der Kompaktplatte geführt.

Es wird nun der Aufbau des in Figur 3 gezeigten Fokus- und Spurregelkreises beschrieben.

Der Ausgang eines Fuzzy-Reglers FR ist mit dem Eingang eines Demulitplexers DEMUX verbunden, dessen erster Ausgang mit dem Eingang eines Digital-Analog-Wandlers DA1 verbunden ist und dessen zweiter Ausgang mit dem Eingang eines Digital-Analog-Wandlers DA2 verbunden ist. Der Ausgang des Digital-Analog-Wandlers DA1 ist über einen Verstärker V1 mit den Eingang der Regelstrecke RS1 verbunden, deren Ausgang mit dem Eingang eines Verstärkers V2 verbunden ist. Der Ausgang des Digital-Analog-Wandlers DA2 ist mit dem Eingang eines Verstärkers V3 verbunden, dessen Ausgang mit dem Eingang der Regelstrecke RS2 verbunden ist. Der Ausgang der Regelstrecke RS2 ist mit dem Eingang eines Verstärkers V4 verbunden, dessen Ausgang mit dem Eingang eines Analog-Digital-Wandlers AD12 verbunden ist. Der Ausgang des Verstärkers V2 ist mit dem Eingang eines Analog-Digital-Wandlers AD11 verbunden. Die Ausgänge der beiden Analog-Digital-Wandler AD11 und AD12 sind mit den Eingängen eines Multiplexers MUX1 verbunden, dessen Ausgang mit dem ersten Eingang E1 des Fuzzy-Reglers FR verbunden ist. Der Ausgang der Regelstrecke RS1 ist außerdem mit dem Eingang eines ersten Differenziergliedes D1 verbunden, dessen Ausgang mit dem Eingang eines Verstärkers V5 verbunden ist. Der Ausgang der Regelstrecke RS2 ist mit dem Eingang eines Differenziergliedes D2 verbunden, dessen Ausgang mit dem Eingang eines Verstärkers V6 verbunden ist. Der Ausgang des Verstärkers V5 ist mit dem Eingang eines Analog-Digital-Wandlers AD21 verbunden, dessen Ausgang mit dem ersten Eingang eines Multiplexers MUX2 verbunden ist. Der Ausgang des Verstärkers V6 ist mit dem Eingang eines Analog-Digital-Wandlers AD22 verbunden, dessen Ausgang mit dem zweiten Eingang des Multiplexers MUX2 verbunden ist. Der Ausgang des Multiplexers MUX2 ist mit dem zweiten Eingang E2 des Fuzzy-Reglers verbunden. Ein Taktgenerator TG liefert den Takt für aen Demultiplexer DEMUX, die Multiplexer MUX1 und MUX2, die Digital-Analog-Wandler DA11, DA12, die Analog-Digital-Wandler AD11, AD12, AD21 und AD22.

Die Regelstrecke RS1 ist die Fokusregelstrecke, während die Regelstrecke RS2 die Spurregelstrecke darstellt. Die Verstärker V1 bis V6 dienen der Pegelanpassung. Zu jedem Fokusfehlersignal FE, das die Fokusregelstrecke RS1 abgibt, sucht der Fuzzy-Regler mit Hilfe des differenzierten Fokusfehlersignales den zugehörigen Stellwert aus der Wertetabelle. Ebenso sucht der Fuzzy-Regler FR zu jedem Spurfehlersignal TE am Ausgang der Spurregelstrecke RS2 mit Hilfe des differenzierten Spurfehlersignales den zugehörigen Stellwert aus der Wertetabelle. Es erhalten daher im Zeitmultiplexbetrieb b abwechselnd die Fokusregelstrecke und die Spurregelstrecke ein Stellsignal.

Die Erfindung ist aber keineswegs auf die Servokreise - den Fokus- und den Spurregelkreis - eines CD-Spielers beschränkt, sondern erstreckt sich auf das gesamte Gebiet der Regelungstechnik. Die Erfindung läßt sich z.B. in vorteilhafter Weise in dem bekannten Anitblockiersystem für Fahrzeuge, allgemein in der chemischen Verfahrenstechnik, z.B. in Abgasentgiftungsanlagen einsetzen.

Zusammenfassend seien nochmals die wesentlichen Vorteile der Erfindung aufgezählt: Einsparen von Reglern, einfache, da einmalige Optimierung, universelle Einsetzbarkeit in der Regelungstechnik, keine Justierung der Regelverstärkung, weitgehende Unabhängigkeit von Alterung der Bauteile und keine Drift der Reglerparameter infolge von Temperaturschwankungen.

## Patentansprüche

1. Regelverfahren für einen Regelkreis, der nach der unscharfen Logik arbeitet, **dadurch gekennzeichnet,** daß mehrere Regelstrecken unterschiedlicher art von nur einem einzigen Fuzzy-Regler (FR) bedient werden, der im Zeitmultiplexbetrieb an die Regelstrecken (RS1, RS2, .... RSn) geschaltet wird.

2. Regelkreis, der nach der unscharfen Logik regelt, **dadurch gekennzeichnet,** daß mehrere Regelstrecken unterschiedlicher art (RS1, RS2, ..., RSn) von nur einem einzigen Fuzzy-Regler (FR) bedient werden, der im Zeitmultiplexbetrieb an die Regelstrecken (RS1, RS2, ..., RSn) geschaltet wird.

3. Regelkreis nach Anspruch 2, **dadurch gekennzeichnet,** daß der Ausgang eines ersten Multiplexers (MUX1) mit dem ersten Eingang (E1) des Fuzzy-Reglers (FR) verbunden ist, dessen Ausgang mit dem Eingang eines Demultiplexers (DEMUX) verbunden ist, daß jeder Ausgang des Demultiplexers (DEMUX) mit dem Eingang je einer Regelstrecke (RS1, RS2, ..., RSn) verbunden ist und daß der Ausgang jeder Regelstrecke (RS1, RS2, ..., RSn) mit je einem Eingang des ersten Multiplexers (MUX1) verbunden ist.

4. Regelkreis nach Anspruch 2 oder 3, **dadurch gekennzeichnet,** daß der Ausgang eines ersten Multiplexers (MUX1) mit dem ersten Eingang (E1) des Fuzzy-Reglers (RF) verbunden ist, dessen Ausgang mit dem Eingang eines Demultiplexers (DEMUX) verbunden ist, daß jeder Ausgang des Demultiplexers (DEMUX) mit dem Eingang je eines Digital-Analog-Wandlers (DA1, DA2, ..., DAn) verbunden ist, daß auf jeden Digital-Analog-Wandler (DA1, DA2, ..., DAn) eine Regelstrecke (RS1, RS2, ..., RSn) folgt, daß auf jede Regelstrecke (RS1, RS2, ..., RSn) ein Analog-Digital-Wandler (AD11, AD12, ... AD1n) folgt und daß die Ausgänge der Analog-Digital-Wandler (AD11, AD12, ..., AD1n) mit den Eingängen des ersten Multiplexers (MUX1) verbunden sind.

5. Regelkreis nach Anspruch 4, **dadurch gekennzeichnet,** daß der Ausgang jeder Regelstrecke (RS1, RS2, ..., RSn) mit dem Eingang je eines Differenziergliedes (D1, D2, ..., Dn) verbunden ist, daß der Ausgang jedes Differenziergliedes (D1, D2, ..., Dn) mit je einem Eingang eines Analog-Digital-Wandlers (AD21, AD22, ..., AD2n) verbunden ist und daß die Ausgänge der Analog-Digital-Wandler (AD21, AD22, ..., AD2n) mit den Eingängen eines zweiten Demulitplexers (DEMUX 2) verbunden sind, dessen Ausgang mit dem zweiten Eingang (E2) des Fuzzy-Reglers (FR) verbunden ist.

6. Regelkreis nach Anspruch 2, 3, 4 oder 5, **dadurch gekennzeichnet,** daß im Fuzzy-Regler (FR) in einer Wertetabelle die digitalen Regelwerte für die einzelnen Regelstrecken (RS1, RS2, ... RSn) gespeichert sind.

7. Regelkreis nach Anspruch 2, 3, 4, 5 oder 6, **dadurch gekennzeichnet,** daß der Fuzzy-Regler (FR) für den Fokusregelkreis und den Spurregelkreis eines optischen Wiedergabegerätes oder eines magneto-optischen Aufzeichnungs- und Wiedergabegerätes vorgesehen ist, um den die Daten eines plattenförmigen Aufzeichnungsträgers abtastenden Lichtstrahl auf den Aufzeichnungsträger zu fokussieren und entlang den Datenspuren des Aufzeichnungsträger zu führen.

## Claims

1. Control method for a control circuit which operates in accordance with the principles of fuzzy logic, characterised in that, a plurality of control paths of differing types are served by only a single fuzzy controller (FR) which is connected to the control paths (RS1, RS2, ..., RSn) on a time division multiplex basis.

2. Control circuit which effects control using fuzzy logic, characterised in that, a plurality of control paths of differing types (RS1, RS2, ..., RSn) are served by only a single fuzzy controller (FR) which is connected to the control paths (RS1, RS2, ..., RSn) on a time division multiplex basis.

3. Control circuit in accordance with Claim 2, characterised in that, the output of a first multiplexer (MUX1) is connected to the first input (E1) of the fuzzy controller (FR) whose output is connected to the input of a demultiplexer (DEMUX), that each output of the demultiplexer (DEMUX) is connected to the input of a respective control path (RS1, RS2, ..., RSn) and that the output of each control path (RS1, RS2, ..., RSn) is connected to a respective input of the first multiplexer (MUX1).

4. Control circuit in accordance with Claim 2 or 3, characterised in that, the output of a first multiplexer (MUX1) is connected to the first input (E1) of the fuzzy controller (FR) whose output is connected to the input of a demultiplexer (DEMUX), that each output of the demultiplexer (DEMUX) is connected to the input of a respective digital-analogue converter (DA1, DA2, ..., DAn), that a control path (RS1, RS2, ..., RSn) follows each digital-analogue converter (DA1, DA2, ..., DAn), that an analogue-digital converter (AD11, AD12, ..., ADn) follows each control path (RS1, RS2, ..., RSn) and that the outputs of the analogue-digital converters AD11, AD12, ..., ADn) are connected to the inputs of the first multiplexer (MUX1).

5. Control circuit in accordance with Claim 4, characterised in that, the output of each control path (RS1, RS2, ..., RSn) is connected to the input of a respective differentiating element (D1, D2, ..., Dn), that the output of each differentiating element (D1, D2, ..., Dn) is connected to a respective input of an analogue-digital converter (AD21, AD22, ..., AD2n) and that the outputs of the analogue-digital converters (AD21, AD22, ..., AD2n) are connected to the inputs of a second demultiplexer (DEMUX 2) whose output is connected to the second input (E2) of the fuzzy controller (FR).

6. Control circuit in accordance with Claim 2, 3, 4 or 5, characterised in that, the digital control values for the individual control paths (RS1, RS2, ..., RSn) are stored in a table of values in the fuzzy controller (FR).

7. Control circuit in accordance with Claim 2, 3, 4, 5 or 6, characterised in that, the fuzzy controller (FR) is provided for the focusing control loop and the tracking control loop of an optical reproduction device or of a magneto-optic recording and reproduction device in order to focus the light beam which is scanning the data on a disc-like recording medium onto the recording medium and to guide it along the data tracks of the recording medium.

## Revendications

1. Procédé de régulation pour un circuit de régulation, qui fonctionne selon le principe de la logique floue, caractérisé en ce que plusieurs voies de régulation de type varié ne sont actionnées que par un seul régulateur Fuzzy (FR) qui est connecté aux voies de régulation (RS1, RS2, ..., RSn) en mode multiplexé séquentiel.

2. Circuit de régulation, qui régule selon le principe de la logique floue, caractérisé en ce que plusieurs voies de régulation (RS1, RS2, ..., RSn) de type varié ne sont actionnées que par un seul régulateur Fuzzy (FR) qui est connecté aux voies de régulation (RS1, RS2, ..., RSn) en mode multiplexé séquentiel.

3. Circuit de régulation selon la revendication 2, caractérisé en ce que la sortie d'un premier multiplexeur (MUX1) est raccordée à la première entrée (E1) du régulateur Fuzzy (FR) dont la sortie est raccordée à l'entrée d'un démultiplexeur (DEMUX), en ce que chaque sortie du démultiplexeur (DEMUX) est raccordée à l'entrée respective de chacune des voies de régulation (RS1, RS2, ..., RSn), et en ce que la sortie de chacune des voies de régulation (RS1, RS2, ..., RSn) est raccordée à chacune des entrées respectives du premier multiplexeur (MUX1).

4. Circuit de régulation selon la revendication 2 ou 3, caractérisé en ce que la sortie d'un premier multiplexeur (MUX1) est raccordée à la première entrée (E1) du régulateur Fuzzy (FR) dont la sortie est raccordée à l'entrée d'un démultiplexeur (DEMUX), en ce que chaque sortie du démultiplexeur (DEMUX) est raccordée à l'entrée respective de chacun des convertisseurs numériques analogiques (DA1, DA2, ..., DAn), en ce que chacun des convertisseurs numériques analogiques (DA1, DA2, ..., DAn) est suivi d'une voie de régulation (RS1, RS2, ..., RSn), en ce que chaque voie de régulation (RS1, RS2, ..., RSn) est suivie d'un convertisseur analogique numérique (AD11, AD12, ..., AD1n), et en ce que les sorties des convertisseurs analogiques numériques (AD11, AD12, ..., AD1n) sont raccordées aux entrées du premier multiplexeur (MUX1).

5. Circuit de régulation selon la revendication 4, caractérisé en ce que la sortie de chaque voie de régulation (RS1, RS2, ..., RSn) est raccordée à l'entrée de chacun des éléments de différentiation (D1, D2, ..., Dn), en ce que la sortie de chacun des éléments de différentiation (D1, D2, ..., Dn) est raccordée à l'entrée de chacun des convertisseurs analogiques numériques (AD21, AD22, ..., AD2n), et en ce que les sorties des convertisseurs analogiques numériques (AD21, AD22, ..., AD2n) sont raccordées aux entrées d'un second multiplexeur (MUX2) dont la sortie est raccordée à la seconde entrée (E2) du régulateur Fuzzy (FR).

6. Circuit de régulation selon la revendication 2, 3, 4 ou 5, caractérisé en ce que les valeurs numériques de régulation sont stockées dans un tableau de valeurs dans le régulateur Fuzzy (FR) pour les voies de régulation individuelles (RS1, RS2, ..., RSn).

7. Circuit de régulation selon la revendication 2, 3, 4, 5 ou 6, caractérisé en ce que le régulateur Fuzzy (FR) est prévu pour le circuit de régulation de la focalisation et pour le circuit de régulation de la piste d'un appareil de lecture optique pour focaliser le rayon lumineux, qui lit les données sur un support d'enregistrement en forme de disque, sur le support d'enregistrement et pour guider le rayon lumineux le long des pistes de données du support d'enregistrement.
